# EUROPÄISCHE PATENTSCHRIFT

(11) **EP 4 173 852 B1**
(45) Veröffentlichungstag und Bekanntmachung des Hinweises auf die Patenterteilung: **26.03.2025**
(21) Anmeldenummer: 22197494.2
(22) Anmeldetag: 23.09.2022
(51) Int. Cl.: B60C 23/04

(54) **REIFENKONTROLLSYSTEM FÜR EIN KRAFTFAHRZEUG, SOWIE KRAFTFAHRZEUG MIT EINEM DIESBEZÜGLICHEN REIFENKONTROLLSYSTEM**
TYRE CONTROL SYSTEM FOR A MOTOR VEHICLE, AND MOTOR VEHICLE COMPRISING A TYRE CONTROL SYSTEM ASSOCIATED THEREWITH
SYSTÈME DE CONTRÔLE DE PNEUMATIQUE POUR UN VÉHICULE AUTOMOBILE ET VÉHICULE AUTOMOBILE DOTÉ D'UN SYSTÈME DE CONTRÔLE DE PNEUMATIQUE ASSOCIÉ

(30) Priorität: 27.10.2021 DE 102021127966
(43) Veröffentlichungstag der Anmeldung: 03.05.2023
(73) Patentinhaber: ZF CV Systems Europe BV, 1170 Brüssel (BE)
(72) Erfinder: CORNELIUS, Christian, 31832 Springe (DE); KAMINSKI, Jan Leon, 30539 Bemerode (DE); WITTE, Norbert, 31867 Lauenau (DE)
(74) Vertreter: Ohlendorf, Henrike

(56) Entgegenhaltungen:
- DE-A1- 10 360 780
- DE-A1- 102010 037 597
- JP-A- 2004 284 396
- US-A1- 2005 151 375
- US-A1- 2008 191 855
- US-A1- 2017 214 297
- US-A9- 2018 138 786

## Beschreibung

Die Erfindung betrifft ein Reifenkontrollsystem für ein Kraftfahrzeug, insbesondere ein Nutzfahrzeug, insbesondere ein Reifendruckkontrollsystem zur Überwachung des Reifendrucks bei einem Lastkraftfahrzeug, sowie ein Kraftfahrzeug, insbesondere ein Nutzfahrzeug, mit einem dementsprechenden Reifenkontrollsystem.

Reifendruckkontrollsysteme dienen der Überwachung des Reifendrucks bei Kraftfahrzeugen, um Unfälle durch fehlerhaften Reifendruck zu verhindern. Darüber hinaus lässt sich mit einem optimalen Reifendruck Kraftstoff sparen und unnötiger Reifenverschleiß vermeiden.

Für Lastkraftfahrzeuge werden üblicherweise direkt messende Systeme verwendet, bei denen eine Radelektronik aktiv den Innendruck und beispielsweise auch die Lufttemperatur innerhalb eines Reifens erfasst. Diese Informationen werden zusammen mit einem Identifikator in gewissen Intervallen über Funk an eine Empfangseinrichtung im Lastkraftfahrzeug übertragen und in einem Steuergerät ausgewertet. Systeme dieser Art können Druckverluste an allen Reifen erkennen, da sie direkt den Druck von jedem Reifen überwachen.

Ein Reifendruckkontrollsystem dieser Art für ein Kraftfahrzeug ist aus der US 2008/0191855 A1 bekannt. Dieses verwendet für jedes Rad eine im Rad angeordnete Radelektronik mit einem Drucksensor und eine in jedem Radkasten angeordnete Empfangselektronik, die jeweils die von einer betreffenden Radelektronik gesendeten Signale empfängt und über einen Datenbus an eine Auswerteelektronik weiterleitet.

Eine Verwendung von mehreren Sendeantennen und/oder Empfangsantennen kann dazu genutzt werden, um den Empfang der Reifendruck-Sensoren im Stillstand eines Fahrzeugs zu verbessern. Dies führt allerdings zu deutlich höheren Systemkosten. Ein derartiges Reifendruckkontrollsystem ist aus der US 6,985,117 B2 bekannt. Dieses enthält mehrere stationär angeordnete Primärantennen und mehrere an einem Fahrzeugreifen angeordnete Sekundärantennen zur Übertragung elektrischer Energie und für eine Signalübertragung. Als Sekundärantennen werden vorzugsweise Patch-Antennen verwendet, die auf einem Felgenband um eine Radfelge herum angeordnet sind.

Die DE 199 26 616 offenbart ein Reifendruckkontrollsystem, das ein Antennensystem mit zwei Antennen aufweist, bei dem zur Verbesserung der Empfangswahrscheinlichkeit die Richtcharakteristik der Antenne aktiv verstellbar ist. Hierdurch kann der Empfang für eine Radposition durch eine gezielte Änderung der Richtcharakteristik verbessert werden, jedoch werden durch diesen Aufbau Abschirmungseffekte nicht gänzlich vermieden.

Aus der US 2003/0038716 A1 ist ein direkt messendes Reifendruckkontrollsystem bekannt, das mit Radsensoren eines Antiblockiersystems (ABS) kombiniert ist.

Bei Lastkraftfahrzeugen ist bereits vor Fahrtantritt und während einer längeren Stillstandszeit die Information des korrekten Reifendrucks an einem Lastkraftfahrzeug für eine Spedition entscheidend. Mit einem System nach dem Stand der Technik, bestehend aus einem Empfängermodul und einem internen Reifendrucksensor an oder in jedem Rad, ist eine Reifendrucküberwachung während des Stillstands jedoch nicht zuverlässig möglich. Wenn ein Rad am Fahrzeug so steht, dass das Sensorsignal durch die Felge und andere abschirmende Komponenten wie Achsenrohr oder Rahmenbauteile hindurch im Empfängermodul nicht empfangen wird, kann auch kein Reifendruckwert übermittelt werden. In diesem Fall können die Reifendruckwerte erst wieder nach Fahrtantritt übermittelt werden.

Der Funkempfang von Signalen eines Reifendrucksensors hängt daher empfindlich von der Position des Reifendrucksensors zwischen Reifen und Felge ab. Zum einen kann der Empfang gemindert werden, wenn die Signale des Reifendrucksensors durch einen Felgenrand und ein Felgenbett der Felge bedämpft werden. Des Weiteren kann die Sendeleistung der Antenne durch nah am Reifendrucksensor befindliches ferromagnetisches Material, zum Beispiel Stahl der Felge, gemindert werden. Zum anderen kann auch eine Stahlkarkasse unter der Lauffläche des Reifens das Sensorsignal stark bedämpfen.

Wenn das Sensorsignal zu schwach aus dem Reifen gelangt, ist die Wahrscheinlichkeit dafür, dass das Sensorsignal nicht vom Empfänger empfangen wird, sehr hoch. Dadurch steigt die Gefahr eines nicht erkannten Reifendruckverlustes und auch das Risiko eines Reifentotalausfalls.

Die JP 2004 284396 A offenbart eine Installationsstruktur für eine Sensoreinheit in einer Radzustands-Detektionseinrichtung für ein Fahrzeug. Auf einer Felge und innerhalb eines Reifens ist eine Sensoreinheit an einem äußeren Ring angeordnet. Der äußere Ring ist dazu vorgesehen, auf einem an der Felge befestigten inneren Ring zu gleiten. Der äußere Ring ist aus Metall und weist einen Gewichtsabschnitt auf, der sich in einem Stillstand oder einer Langsamfahrt des Fahrzeugs durch Schwerkrafteinwirkung nach unten ausrichtet. Die Sensoreinheit und der Gewichtsabschnitt sind punktsymmetrisch an dem äußeren Ring angeordnet, sodass sich die Sensoreinheit entsprechend in dem Stillstand oder der Langsamfahrt nach oben ausrichtet.

Die DE 10 2010 037 597 offenbart ein Reifenmodul für Fahrzeugreifen, das in einem Reifenhohlraum des Fahrzeugreifens frei beweglich an einem bandartigen Haltemittel angeordnet ist, wobei das Haltemittel im Wesentlichen koaxial zu einer Felge im Reifenhohlraum angeordnet ist. Das Reifenmodul dient einer Reifenidentifikation, Luftdrucküberwachung, Temperaturmessung und/oder einer Messung von mechanischen Spannungszuständen in dem Fahrzeugreifen.

Die DE 103 60 780 A1 offenbart eine Vorrichtung mit einem Sensormodul zur Erfassung und Verarbeitung eines einen Zustand eines Fahrzeugreifens charakterisierenden Messsignals, die fest an einem Felgenbett des Reifens befestigt ist. Die US 2005/151375 A1 offenbart eine Vorrichtung zur Energiegewinnung in einem Fahrzeugreifen.

Aufgabe der Erfindung ist es daher, ein Reifenkontrollsystem anzugeben, das kostengünstig ist und eine hohe Zuverlässigkeit aufweist.

Diese Aufgabe wird durch ein Reifenkontrollsystem gemäß Anspruch 1, sowie durch ein Kraftfahrzeug mit einem diesbezüglichen Reifenkontrollsystem gemäß Anspruch 10 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft ein Reifenkontrollsystem für ein Kraftfahrzeug, insbesondere ein Nutzfahrzeug, wobei das Reifenkontrollsystem eine Empfangseinrichtung, die fest in oder an dem Kraftfahrzeug befestigt ist, einen Gurt und ein Elektronikmodul, das mittels des Gurts auf einer Felge eines Rads des Kraftfahrzeugs befestigt ist, enthält. Der Gurt weist hierbei einen Schlupf auf, und die Länge des Gurts ist insbesondere derart dimensioniert, dass keine Abschirmungseffekte durch die Felge auftreten.

Die Länge des Gurts ist derart gewählt, dass das Elektronikmodul im Stillstand des Kraftfahrzeugs nicht durch einen Felgenrand des Kraftfahrzeugs verdeckt wird, so dass kein Abschirmungseffekt durch den Felgenrand auftritt und von dem Elektronikmodul gesendete Signale ohne Abschwächung von der Empfangseinrichtung empfangen werden können.

In einer Ausführungsform weist der Gurt eine Länge auf, die größer als ein Umfang eines Felgenbetts der Felge ist, derart, dass der Gurt mit einem Schlupf auf dem Felgenbett aufliegt.

In einer weiteren Ausführungsform ist das Elektronikmodul in einer Tasche angeordnet, die an dem Gurt befestigt ist, wobei das Elektronikmodul und/oder die Tasche insbesondere ein Gewicht aufweisen, durch das sie im Stillstand des Fahrzeugs nach unten durchhängen.

In einer weiteren Ausführungsform weist das Elektronikmodul einen Drucksensor und/oder einen Temperatursensor auf.

In einer weiteren Ausführungsform ist der Gurt als ein Felgenband, eine Schnur oder ein Riemen ausgestaltet.

In einer weiteren Ausführungsform ist die Empfangseinrichtung in einem Radkasten des Kraftfahrzeugs, in dem das Rad montiert ist, angeordnet.

In einer weiteren Ausführungsform ist an oder auf der Felge eine Tauchspulen-Vorrichtung für eine Energierückgewinnung und für eine Versorgung des Elektronikmoduls mit einer Versorgungsspannung angeordnet.

Die Erfindung betrifft zudem ein Kraftfahrzeug, insbesondere ein Nutzfahrzeug, das ein Reifenkontrollsystem mit einer Empfangseinrichtung, die fest in oder an dem Fahrzeug befestigt ist, und ein Elektronikmodul, das mittels eines Gurts auf einer Felge eines Rads des Kraftfahrzeugs befestigt ist, enthält, wobei der Gurt einen Schlupf aufweist.

Ausführungsbeispiele der Erfindung sind in den Zeichnungen schematisch dargestellt und werden nachfolgend anhand der Figuren näher erläutert.

Es zeigen:
- Fig. 1: ein Reifenkontrollsystem für ein Kraftfahrzeug;
- Fig. 2: ein in einem Rad montiertes Elektronikmodul nach dem Stand der Technik; und
- Fig. 3: ein in einem Rad montiertes Elektronikmodul nach der Erfindung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

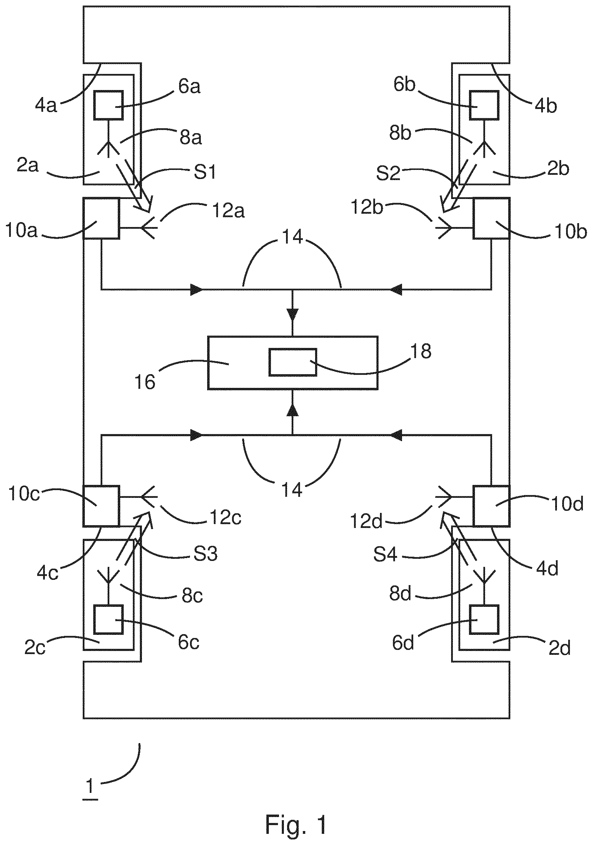

In der Fig. 1 ist ein Kraftfahrzeug 1 mit einem Reifendruckkontrollsystem schematisch dargestellt. Das Kraftfahrzeug 1 weist vier Räder 2a - 2d auf, die in einem entsprechenden Radkasten 4a - 4d des Kraftfahrzeugs 1 angeordnet und an einer Achse, in der Fig. 1 nicht dargestellt, befestigt sind. Jedem einzelnen Rad 2a - 2d ist eine Sendeeinrichtung 6a - 6d zugeordnet. Diese Sendeeinrichtungen 6a - 6d können in bekannter Weise beispielsweise innerhalb eines jeweiligen Reifens, also in dessen Gummimaterial, angeordnet sein, und/oder im Bereich des Ventils oder der Felge des jeweiligen Rades 2a - 2d angeordnet sein. Jede Sendeeinrichtung 6a - 6d umfasst einen Radsensor, der dazu ausgelegt ist, radspezifische Parameter, wie z. B. den Reifendruck, die Reifentemperatur, die Umdrehungsgeschwindigkeit eines Rades, die Profiltiefe des Reifens und gegebenenfalls auch andere Parameter, zu ermitteln.

Jede der Sendeeinrichtungen 6a - 6d umfasst ferner eine Schaltungsanordnung, welche die so von dem jeweiligen Radsensor gewonnenen Informationen vorauswertet und für ein Weiterleiten dieser Informationen aufbereitet. Die von den Sendeeinrichtungen 6a - 6d ermittelten Informationen werden einem Sendesignal S1 - S4 aufmoduliert bzw. aufkodiert und über eine drahtlose Kommunikationsverbindung an das Kraftfahrzeug 1 gesendet. Zu diesem Zweck umfasst jede Sendeeinrichtung 6a - 6d eine jeweilige Sendeantenne 8a - 8d.

Zum Empfangen der Sendesignale S1 - S4 weist das Reifendruckkontrollsystem fahrzeugseitig vier Empfangseinrichtungen 10a - 10d auf, die jeweils eine Empfangsantenne 12a -12d umfassen. Die Empfangseinrichtungen 10a - 10d sind im Bereich der Radkästen 4a -4d und somit in unmittelbar Nähe zu den jeweiligen Sendeeinrichtungen 6a - 6d angeordnet.

Das Reifendruckkontrollsystem weist weiterhin einen Datenbus 14 sowie ein Steuergerät 16, welches eine zentrale Recheneinheit 18 beinhaltet, auf. Über den Datenbus 14 können die Empfangseinrichtungen 10a -10d mit dem Steuergerät 16 kommunizieren. Das Steuergerät 16, die Empfangseinrichtungen 10a -10d und die Sendeeinrichtungen 6a - 6d sind dafür vorgesehen, die jeweiligen Reifendrücke beispielsweise innerhalb bestimmter Zeitabschnitte zu messen, die gemessenen Reifendrücke auszuwerten und eine das Kraftfahrzeug 1 steuernde Person zu informieren, wenn eines der Räder 2a - 2d z. B. einen zu niedrigen Reifendruck aufweist. Die Anordnung der Empfangseinrichtungen 10a -10d in der unmittelbaren Nähe des jeweiligen Rads 2a - 2d hat den Vorteil, dass die Sendesignale S1 - S4 auch dann noch mit relativ großer Sicherheit empfangen werden können, wenn diese mit einer geringen Sendeleistung ausgesendet werden.

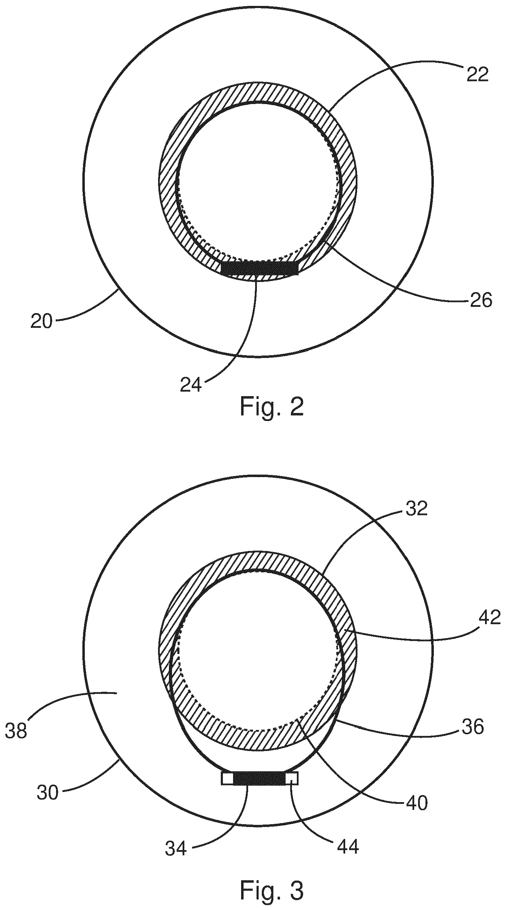

Eine Sendeeinrichtung 24 nach dem Stand der Technik, die an einem Rad 20 befestigt ist, ist schematisch in der Fig. 2 dargestellt. Die Sendeeinrichtung 24 ist hierbei mit Hilfe eines Gurts 26 fest auf einer Felge 22 des Rads 20 befestigt. Die Sendeeinrichtung 24 ist daher starr auf der Felge 22 fixiert und befindet sich hierdurch im Abschirmungsbereich der Felge 22. Die Sendeeinrichtung 24 weist insbesondere einen Drucksensor, eine mit dem Drucksensor verbundene Verarbeitungseinrichtung und einen mit der Verarbeitungseinrichtung verbundenen Sender, in der Fig. 2 nicht dargestellt, auf, die beispielsweise über eine in der Verarbeitungseinrichtung integrierte Batterie mit elektrischer Energie versorgt werden. Der Drucksensor misst den aktuellen Reifendruck des Rades 20, und die Verarbeitungseinrichtung sendet diese Information als ein Sendesignal drahtlos auf bekannte Weise über den Sender an eine entsprechende Empfangseinrichtung eines Fahrzeugs.

Da die Sendeeinrichtung 24 durch den Gurt 26 fest auf der Felge 22 montiert ist, dreht sich hierbei die Sendeeinrichtung 24 bei einer Bewegung des Fahrzeugs mit dem Rad 20 mit. Wird nur eine Empfangsstation beispielsweise im Radkasten des Fahrzeugs für den Empfang des Sendesignals verwendet, so ändert sich während einer Fahrt des Fahrzeugs hierdurch ständig die Stärke des Sendesignals. Weiterhin treten während der Drehung des Rads 20 durch das in der Felge 22 verwendete Eisen unterschiedliche Abschattungseffekte auf, die zu Signalschwankungen führen und auch zu einem Signalverlust führen können. Außerdem werden im Stillstand des Fahrzeugs in der Empfangsstation unterschiedliche Signalstärken des Sendesignals empfangen, je nachdem, in welcher Position sich die Sendeeinrichtung 24 beim Stillstand auf der Felge befindet. Ein Reifendruckkontrollsystem dieser Art mit einem Sender und nur einer Empfangsstation misst daher unter Umständen nicht in allen Betriebssituationen zuverlässig.

In einem Ausführungsbeispiel der Erfindung, in der Fig. 3 schematisch dargestellt, weist ein Rad 30 eine Felge 32, einen Reifen 38 und ein Elektronikmodul 34 auf. Das Elektronikmodul 34 ist an einem Gurt 36 befestigt, wobei der Gurt 36 auf der Felge 32 aufliegt. Das Elektronikmodul 34 ist daher innerhalb des Reifens 38 angeordnet, so dass das Elektronikmodul 34 vor äußeren Umwelteinflüssen geschützt ist. Das Rad 30 ist an einem Kraftfahrzeug, beispielsweise einem Lastkraftfahrzeug, befestigt. Das Elektronikmodul 34 ist ein Teil eines Reifenkontrollsystems, zu dem auch eine dementsprechende Empfangseinrichtung, in der Fig. 3 nicht dargestellt, gehört. Die Empfangseinrichtung ist beispielsweise in einem Radkasten des Kraftfahrzeugs, in dem das Rad 30 montiert ist, auf bekannte Weise angeordnet.

Der Gurt 36 liegt insbesondere auf einem Felgenbett 40 der Felge 32 auf und besitzt eine Länge, die deutlich größer als der Umfang des Felgenbetts 40 ist, so dass der Gurt 36 locker auf der Felge aufliegt und das Elektronikmodul 34 aufgrund ihres Gewichts im Stillstand des Kraftfahrzeugs nach unten durchhängt. Der Gurt 36 ist daher insbesondere mit einem Schlupf auf dem Felgenbett 40 der Felge 32 angeordnet.

Die Länge des Gurts 36 ist insbesondere derart gewählt, dass das Elektronikmodul 34 im Stillstand des Kraftfahrzeugs nicht durch einen Felgenrand 42 der Felge 32 verdeckt wird, so dass durch den Felgenrand 42 kein Abschirmungseffekt zwischen dem Elektronikmodul 34 und der Empfangseinrichtung auftritt und von dem Elektronikmodul 34 gesendete Signale daher ohne Abschwächung von der Empfangseinrichtung empfangen werden können.

Ein weiterer Vorteil, der sich durch die hängende Position des Elektronikmoduls 34 ergibt, ist eine repräsentativere Temperaturmessung. Sensoren, die in dem Elektronikmodul 34 integriert sind, können genutzt werden, um einen temperaturkompensierten Druckwert, z. B. auf 20 °C zurückgerechnet, auszugeben. Ein Problem der Temperaturkompensation ist ein sogenannter *"Hot Shutdown".* Wenn das Fahrzeug nach einer langen Bremsphase, z.B. nach einer Bergabfahrt, abgestellt wird, können glühende Bremsbeläge, die sich in der Nähe des Rads 30 befinden, die Felge 32 stark erhitzen. Das führt dazu, dass ein in einem Elektronikmodul integrierter Temperatursensor, der direkt auf der Felge 32 liegt, eine deutlich höhere Temperatur misst, als tatsächlich im Reifen 38 vorhanden ist. Wenn ein Reifenkontrollsystem die von einem Elektronikmodul übermittelten Druckwerte dann mit den falschen Temperaturwerten auf 20 °C kompensiert, kann es zu einer falschen Druckinformation kommen. Durch die hohe Temperatur kann hierbei auch das Elektronikmodul selbst und hierdurch der Reifen beschädigt werden.

Das Elektronikmodul 34 ist vorzugsweise in einer Tasche 44, die an dem Gurt 36 befestigt ist, angeordnet. Dabei ist es wichtig, dass der Gurt auf der Felge Schlupf hat. Somit kann das Elektronikmodul 34 in der Tasche 44, aufgrund seines Gewichts, im Stillstand des Kraftfahrzeugs an der Felge 32 unten im Rad 30 liegen, wodurch die Signale des Elektronikmoduls 34 besser von der Empfangseinrichtung empfangen werden können. Der Felgenrand 42 entspricht dem Abschirmungsbereich der Felge 32. Wie in der Fig. 3 dargestellt, hängt das Elektronikmodul 34 aufgrund der im Vergleich zu dem Umfang des Felgenbetts 40 deutlich größeren Länge des Gurts 36 außerhalb des Abschirmungsbereichs der Felge 32.

Bei Fahrt hebt das Elektronikmodul 34 dauerhaft durch die Zentrifugalkraft von der Felge ab und kann durch die mittlere Position im Reifenquerschnitt ein stärkeres Signal aussenden. Hierdurch wird auch während der Fahrt des Kraftfahrzeugs eine Abschirmung durch den Felgenrand 42 vermieden, und es kann ein ausreichend starkes Signal aus dem Reifen 38 an die Empfangseinrichtung gesendet werden.

Für den Gurt 36 sind mehrere Design-Ausführungen möglich, beispielsweise kann der Gurt 36 auch als ein Felgenband, eine Schnur oder ein Riemen ausgestaltet sein. In einem bevorzugten Ausführungsbeispiel ist der Gurt 36 so lang ausgelegt, dass immer ein Schlupf zwischen dem Gurt 36 und der Felge 32 besteht. Der Gurt 36 kann aber auch für eine bessere Montage so ausgeführt werden, dass er eng an der Felge 32 anliegt und die Tasche 44, in der sich das Elektronikmodul 34 befindet, beweglich ist. Das würde allerdings dazu führen, dass das Elektronikmodul 34 eventuell nicht immer im Stillstand des Kraftfahrzeugs nach unten durchrutscht, jedoch verbleibt hierbei noch eine Verbesserung der Sendeleistung.

Der Hub zwischen der Felge 32 und dem Elektronikmodul 34 kann während des Fahrens des Kraftfahrzeugs auch für eine Energierückgewinnung - *Energy Harvesting -* genutzt werden, wobei eine Oszillation des Elektronikmoduls 34 auf der Felge 32 während der Fahrt des Kraftfahrzeugs ausgenutzt wird. Dies ist beispielsweise durch eine Tauschspulen-Apparatur realisierbar, die zwischen dem Elektronikmodul 34 und der Felge 32 angeordnet ist und aufgrund der wechselnden Erdbeschleunigung eine Spannung in der Tauschspulen-Apparatur induziert, die für den Betrieb des Elektronikmoduls 34 genutzt werden kann.

Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste (Teil der Beschreibung)

- 1: Kraftfahrzeug
- 2a - 2d: Räder
- 4a - 4d: Radkästen
- 6a - 6d: Sendeeinrichtungen
- 8a - 8d: Sendeantennen
- 10a - 10d: Empfangseinrichtungen
- 12a - 12d: Empfangsantennen
- 14: Bus
- 16: Steuergerät
- 18: Recheneinheit
- S1 - S4: Sendesignale
- 20: Rad
- 22: Felge
- 24: Sendeeinrichtung
- 26: Gurt
- 30: Rad
- 32: Felge
- 34: Elektronikmodul
- 36: Gurt
- 38: Reifen
- 40: Felgenbett
- 42: Felgenrand
- 44: Tasche

## Patentansprüche

1. Reifenkontrollsystem für ein Kraftfahrzeug, insbesondere ein Nutzfahrzeug, aufweisend eine Empfangseinrichtung, die fest in oder an dem Kraftfahrzeug befestigt ist, einen Gurt (36) und ein Elektronikmodul (34), das mittels des Gurts (36) auf einer Felge (32) eines Rads (30) des Kraftfahrzeugs befestigt ist, wobei der Gurt (36) einen Schlupf aufweist, **dadurch gekennzeichnet, dass** die Länge des Gurts (36) derart gewählt ist, dass das Elektronikmodul (34) im Stillstand des Kraftfahrzeugs nicht durch einen Felgenrand (42) des Kraftfahrzeugs verdeckt wird, so dass ein Abschirmungseffekt durch den Felgenrand (42) vermieden wird und von dem Elektronikmodul (34) gesendete Signale ohne Abschwächung von der Empfangseinrichtung empfangen werden können.

2. Reifenkontrollsystem nach Anspruch 1, wobei der Gurt (36) eine Länge aufweist, die größer als ein Umfang eines Felgenbetts (40) der Felge (32) ist, so dass der Gurt (36) mit einem Schlupf auf dem Felgenbett (40) aufliegt.

3. Reifenkontrollsystem nach Anspruch 1 oder 2, wobei das Elektronikmodul (34) in einer Tasche (44) angeordnet ist, die an dem Gurt (36) befestigt ist.

4. Reifenkontrollsystem nach Anspruch 1, 2 oder 3, wobei das Elektronikmodul (34) und/oder die Tasche (44) ein Gewicht aufweisen, durch das sie im Stillstand des Fahrzeugs nach unten durchhängen.

5. Reifenkontrollsystem nach einem der vorangehenden Ansprüche, wobei das Elektronikmodul (34) einen Drucksensor und/oder einen Temperatursensor aufweist.

6. Reifenkontrollsystem nach einem der vorangehenden Ansprüche, wobei der Gurt (36) als ein Felgenband, eine Schnur oder ein Riemen ausgestaltet ist.

7. Reifenkontrollsystem nach einem der vorangehenden Ansprüche, wobei die Empfangseinrichtung in einem Radkasten des Kraftfahrzeugs, in dem das Rad (30) montiert ist, angeordnet ist.

8. Reifenkontrollsystem nach einem der vorangehenden Ansprüche, enthaltend eine Tauchspulen-Vorrichtung, die an oder auf der Felge (36) für eine Energierückgewinnung und für eine Versorgung des Elektronikmoduls (34) mit einer Versorgungsspannung angeordnet ist.

9. Kraftfahrzeug, insbesondere Nutzfahrzeug, das ein Reifenkontrollsystem nach einem der vorangehenden Ansprüche aufweist.

## Claims

1. Tire control system for a motor vehicle, in particular a commercial vehicle, comprising a receiving device which is firmly attached in or to the motor vehicle, a belt (36) and an electronic module (34) which is attached by means of the belt (36) to a rim (32) of a wheel (30) of the motor vehicle, the belt (36) having a slip,
**characterized in that** the length of the belt (36) is selected such that the electronic module (34) is not covered by a rim flange (42) of the motor vehicle when the motor vehicle is stationary, so that a shielding effect by the rim flange (42) is prevented and signals sent by the electronic module (34) can be received by the receiving device without attenuation.

2. Tire control system according to claim 1, wherein the belt (36) has a length that is greater than a circumference of a rim well (40) of the rim (32), so that the belt (36) rests on the rim well (40) with a slip.

3. Tire control system according to claim 1 or 2, wherein the electronic module (34) is arranged in a pouch (44) which is attached to the belt (36).

4. Tire control system according to claim 1, 2 or 3, wherein the electronic module (34) and/or the pouch (44) have a weight which causes them to sag downward when the vehicle is stationary.

5. Tire control system according to any of the preceding claims, wherein the electronic module (34) has a pressure sensor and/or a temperature sensor.

6. Tire control system according to any of the preceding claims, wherein the belt (36) is designed as a rim strip, a cord or a strap.

7. Tire control system according to any of the preceding claims, wherein the receiving device is arranged in a wheel housing of the motor vehicle, in which the wheel (30) is mounted.

8. Tire control system according to any of the preceding claims, comprising a plunger coil apparatus arranged on or at the rim (36) for energy recovery and for supplying the electronic module (34) with a supply voltage.

9. Motor vehicle, in particular a commercial vehicle, comprising a tire control system according to any of the preceding claims.

## Revendications

1. Système de contrôle de pneumatique pour un véhicule automobile, en particulier pour un véhicule utilitaire, présentant un appareil de réception fixé dans ou sur le véhicule automobile, une courroie (36) et un module électronique (34) fixé au moyen de la courroie (36) sur une jante (32) d'une roue (30) du véhicule automobile, dans lequel la courroie (36) présente un patinage,
**caractérisé en ce que** la longueur de la courroie (36) est choisie de telle sorte que le module électronique (34) n'est pas recouvert par un rebord de jante (42) du véhicule automobile lorsque le véhicule automobile est à l'arrêt, de sorte qu'un effet de blindage par le rebord de jante (42) est évité et que des signaux envoyés par le module électronique (34) peuvent être reçus sans affaiblissement par l'appareil de réception.

2. Système de contrôle de pneumatique selon la revendication 1, dans lequel la courroie (36) présente une longueur supérieure à une circonférence d'une embase de jante (40) de la jante (32), de sorte que la courroie (36) repose, avec un patinage, sur l'embase de jante (40).

3. Système de contrôle de pneumatique selon la revendication 1 ou 2, dans lequel le module électronique (34) est disposé dans un sac (44) fixé à la courroie (36).

4. Système de contrôle de pneumatique selon la revendication 1, 2 ou 3, dans lequel le module électronique (34) et/ou le sac (44) présentent un poids leur permettant de fléchir vers le bas lorsque le véhicule est à l'arrêt.

5. Système de contrôle de pneumatique selon l'une des revendications précédentes, dans lequel le module électronique (34) présente un capteur de pression et/ou un capteur de température.

6. Système de contrôle de pneumatique selon l'une des revendications précédentes, dans lequel la courroie (36) est conçue sous forme de bande de jante, de cordon ou de poulie.

7. Système de contrôle de pneumatique selon l'une des revendications précédentes, dans lequel l'appareil de réception est disposé dans une joue d'aile du véhicule automobile dans laquelle est montée la roue (30).

8. Système de contrôle de pneumatique selon l'une des revendications précédentes, contenant un dispositif formant bobine mobile disposé sur ou au niveau de la jante (36) pour une récupération d'énergie et pour une alimentation du module électronique (34) avec une tension d'alimentation.

9. Véhicule automobile, en particulier véhicule utilitaire, présentant un système de contrôle de pneumatique selon l'une des revendications précédentes.
